# EUROPÄISCHE PATENTANMELDUNG

(11) **EP 3 862 330 A1**
(43) Veröffentlichungstag der Anmeldung: **11.08.2021**
(21) Anmeldenummer: 20020575.5
(22) Anmeldetag: 30.11.2020
(51) Int. Cl.: C03C 17/00, B05D 1/12, B65G 49/06, B05B 7/04, B05B 7/14, B05C 19/00, B05D 1/34, B05D 7/24, C09D 5/44

(54) **VERFAHREN UND VORRICHTUNG ZUM VERSEHEN VON FLACHGLASELEMENTEN MIT EINEM KORROSIONSSCHUTZ- UND TRENNMITTELAUFTRAG**

(30) Priorität: 07.02.2020 DE 102020000812
(71) Anmelder: Grafotec Spray Systems GmbH, 86420 Diedorf (DE)
(72) Erfinder: MAURER, Benjamin, 86420 Diedorf (DE); RAUH, Sascha, 86153 Augsburg (DE); SENFT, Reinhold, 86157 Augsburg (DE)
(74) Vertreter: Patentanwälte Munk

(57) **Zusammenfassung**

Beim Versehen von Flachglaselementen (2) mit einem ein pulverförmiges Korrosionsschutzmittel und ein pulverförmiges Trennmittel enthaltenden Korrosionsschutz- und Trennmittelauftrag, wobei das Korrosionsschutzmittel und das Trennmittel miteinander auf wenigstens eine Seite der Flachglaselemente (2) aufgetragen werden, können die Teilmengen des pulverförmigen Trennmittels und des pulverförmigen Korrosionsschutzmittels dadurch bedarfsgerecht und somit ohne Überschuss an Trennmittel oder Mangel an Korrosionsschutzmittel dosiert werden, dass das Korrosionsschutzmittel und das Trennmittel jeweils unabhängig voneinander bereitgestellt und unabhängig voneinander dosiert und erst nach der Dosierung miteinander verschnitten werden.

## Beschreibung

Die Erfindung betrifft ein Verfahren und eine Vorrichtung zum Versehen von Flachglaselementen mit einem ein pulverförmiges Korrosionsschutzmittel und ein pulverförmiges Trennmittel enthaltenden Korrosionsschutz- und Trennmittelauftrag, wobei das Korrosionsschutzmittel und das Trennmittel miteinander auf wenigstens eine Seite der Flachglaselemente aufgetragen werden.

Bei der Herstellung von Flachglas wird dieses am Ende des Produktionsprozesses in Form eines in der Regel stehenden Stapels abgestapelt. Um dabei Kratzspuren auf den Flachglaselementen zu vermeiden und eine spätere Entnahme der gestapelten Elemente zu erleichtern, werden diese vor der Abstapelung auf wenigstens einer Seite mit einem pulverförmigen Trennmittel beaufschlagt. Um gleichzeitig einer als Milchigwerden in Erscheinung tretenden Korrosion der gestapelten Flachglaselemente vorzubeugen, werden diese zudem auf wenigstens einer Seite mit einem pulverförmigen Korrosionsschutzmittel beaufschlagt. Zur Bildung des genannten Korrosionsschutz- und Trennmittelauftrags findet bisher ein beide Eigenschaften aufweisendes Kombinationspulver Verwendung, bei dem es sich um einen Verschnitt des pulverförmigen Korrosionsschutzmittels und des pulverförmigen Trennmittels handelt. Ein derartiger Verschnitt weist immer ein bestimmtes Verhältnis der einzelnen Inhaltsstoffe zueinander auf und wird bisher nur in einigen festen Mischungsverhältnissen angeboten, welche den durchschnittlichen Anforderungen genügen. Es kann jedoch vorkommen, dass infolge besonderer Standortbedingungen etc. beispielsweise mehr Korrosionsschutzmittel benötigt wird, als unter normalen Bedingungen. Dem kann bisher bei Verwendung eines Kombinationspulvers mit einem fest vorgegebenen Mischungsverhältnis nur durch Erhöhung der aufgetragenen Gesamtmenge Rechnung getragen werden, was jedoch dazu führt, dass die Teilmenge jeder der beiden Komponenten erhöht wird und dementsprechend bei einem erhöhten Bedarf an Korrosionsschutzmittel auch eine entsprechende Steigerung des Auftrags an Trennmittel erfolgt, was zu einem Trennmittelüberschuss führt. Die hieraus resultierende Materialverschwendung und Generierung von Kosten ist unerwünscht. Hinzu kommt, dass der genannte Materialüberschuss beim Anlegen der Flachglaselemente an den Senkrechtstapel nach unten herabfallen kann, so dass sich im Bereich der Stapelunterkante Materialansammlungen ergeben, die zu einer keilförmigen Auffächerung der aneinander angestellten Flachglaselemente und damit zu einem erhöhten Platzbedarf führt, was ebenfalls unerwünscht ist.

Hiervon ausgehend ist es daher die Aufgabe der vorliegenden Erfindung die eingangs geschilderten Nachteile zu vermeiden und ein Verfahren und eine Vorrichtung eingangs erwähnter Art so zu verbessern, dass einem erhöhten Bedarf bezüglich einer Komponente des Pulverauftrags individuell Rechnung getragen werden kann, ohne gleichzeitig die aufgetragene Menge der jeweils anderen Komponente zu verändern.

Die verfahrensmäßige Lösung dieser Aufgabe ist im Anspruch 1 angegeben. Hiernach wird ein Verfahren zum Versehen von Flachglaselementen mit einem ein pulverförmiges Korrosionsschutzmittel und ein pulverförmiges Trennmittel enthaltenden Korrosionsschutz- und Trennmittelauftrag vorgeschlagen, bei dem das Korrosionsschutzmittel und das Trennmittel miteinander auf wenigstens eine Seite der Flachglaselemente aufgetragen wird, wobei das Korrosionsschutzmittel und das Trennmittel jeweils unabhängig voneinander bereitgestellt und unabhängig voneinander dosiert und erst nach der Dosierung miteinander verschnitten werden.

Die vorrichtungsmäßige Lösung der genannten Aufgabe ist im Anspruch 4 angegeben. Die hiernach vorgeschlagene Vorrichtung enthält eine Dosiereinrichtung, eine dieser vorgeordnete Behälteranordnung und eine dieser nachgeordnete Auftrageinrichtung, wobei die Behälteranordnung einen dem Korrosionsschutzmittel zugeordneten Behälter, der nur mit dem pulverförmigen Korrosionsschutzmittel beaufschlagbar und für dessen Bereitstellung eingerichtet und angeordnet ist, und einen dem pulverförmigen Trennmittel zugeordneten Behälter, der nur mit dem Trennmittel beaufschlagbar und für dessen Bereitstellung eingerichtet und angeordnet ist, aufweist, und wobei die Dosiereinrichtung zwei Dosierer enthält und an jeden Behälter der Behälteranordnung ausgangsseitig ein jeweils zugeordneter, eigener Dosierer angeschlossen ist, dessen Fördermenge unabhängig von der Fördermenge des jeweils anderen Dosierers der Dosiereranordnung einstellbar ist und der ausgangsseitig mit der Auftrageinrichtung verbunden ist. Eine gleichwertige Variante kann darin bestehen, dass der Dosierer in die Auftrageinrichtung integriert ist und so gleichzeitig ein Element der Auftrageinrichtung bildet.

Diese Maßnahmen stellen sicher, dass zum Beispiel bei einer Änderung des Bedarfs an Korrosionsschutzmittel dem durch eine entsprechende Änderung der betreffenden Teilmenge des Gesamtauftrags Rechnung getragen werden kann, ohne gleichzeitig die dem Trennmittel zugeordnete Teilmenge des Gesamtauftrags verändern zu müssen und umgekehrt. Hierdurch wird erreicht, dass nie ein Überschuss oder ein Mangel bezüglich einer Komponente des aufgetragenen Pulverauftrags besteht und dementsprechend eine Materialverschwendung sowie eine Störung der Stapelbildung vermieden und auch Beschädigungen der Flachglaselemente zuverlässig vorgebeugt wird. Mit den erfindungsgemäßen Maßnahmen wird somit die oben genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben.

So kann eine vorteilhafte Ausgestaltung des erfindungsgemäßen Verfahrens darin bestehen, dass das Korrosionsschutzmittel und das Trennmittel nach der Dosierung jeweils separat einander benachbarten, gleichzeitig betätigbaren Organen der Auftrageinrichtung zugeführt und erst beim Auftragen auf die Flachglaselemente miteinander verschnitten werden. Dies ermöglicht eine sinnfällige und übersichtliche Verfahrensdurchführung.

Eine Alternative kann darin bestehen, dass das Korrosionsschutzmittel und das Trennmittel nach der Dosierung zusammengeführt und anschließend als Pulvermischung mittels eines gemeinsamen Organs der Auftrageinrichtung auf die Flachglaselemente aufgetragen werden. Dies vereinfacht die Gestaltung der Auftrageinrichtung und reduziert deren Platzbedarf.

Eine vorteilhafte Fortbildung der erfindungsgemäßen Vorrichtung kann darin bestehen, dass jeder Dosierer in einen jeweils zugeordneten Injektor mündet, der mit einem Luftstrom beaufschlagbar und an eine zur Auftrageinrichtung führende Strömungsleitung angeschlossen ist. Dies ergibt einen zuverlässigen Strömungstransport des von den Dosierern abgegeben Materials, so dass dieses auf die Flachglaselemente aufgesprüht werden kann.

Eine weitere vorteilhafte Ausgestaltung kann darin bestehen, dass die Auftrageinrichtung wenigstens einen quer zur Laufrichtung der darunter vorbei transportierbaren Flachglaselemente angeordneten Auftragbalken mit mehreren über seine Länge verteilten Auftragdüsen aufweist, wobei jeder Auftragbalken an einen der Dosiereranordnung nachgeordneten Verteiler angeschlossen ist, der mehrere mit den Auftragdüsen des zugeordneten Auftragbalkens verbundene Auslässe und einen Eingang aufweist, der an mindestens eine von der Dosiereinrichtung abgehende Strömungsleitung angeschlossen ist. Hierdurch ist sichergestellt, dass auch vergleichsweise breites Flachglas auf der ganzen Breite gleichmäßig im Sprühverfahren beaufschlagt werden kann.

Dabei kann eine erste Variante darin bestehen, dass die Auftrageinrichtung zwei einander benachbarte Auftragbalken aufweist und dass für jeden Auftragbalken ein jeweils zugeordneter Verteiler vorgesehen ist, dessen Eingang an eine unverzweigte aus nur einem zugeordneten Behälter der Behälteranordnung beaufschlagbare Strömungsleitung angeschlossen ist. Da hierfür jede Komponente des Pulverauftrags ein eigener Auftragbalken vorgesehen ist, kann pro Zeiteinheit eine vergleichsweise große Menge versprüht werden, so dass die Flachglaselemente mit einer vergleichsweise hohen Geschwindigkeit transportiert werden können und dennoch von jeder Komponente eine ausreichende Teilmenge aufgesprüht werden kann.

Eine andere Ausführung kann darin bestehen, dass die Auftrageinrichtung nur einen Auftragbalken aufweist und dass der diesem Auftragbalken zugeordnete Verteiler eingangsseitig an einen Sammelstutzen angeschlossen ist, in welchen die aus den beiden Behältern der Behälteranordnung beaufschlagbaren Strömungsleitungen münden. Da nur ein Düsenbalken benötigt wird, ergibt sich ein vergleichsweise einfacher, platzsparender Aufbau.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
Figur 1 eine schematische Darstellung eines ersten Ausführungsbeispiels einer erfindungsgemäßen Vorrichtung zur Beaufschlagung von Flachglaselementen mit einem Korrosionsschutzmittel und einem Trennmittel mit zwei Auftragbalken,
Figur 2 eine Variante zu Figur 1 mit nur einem Auftragbalken.

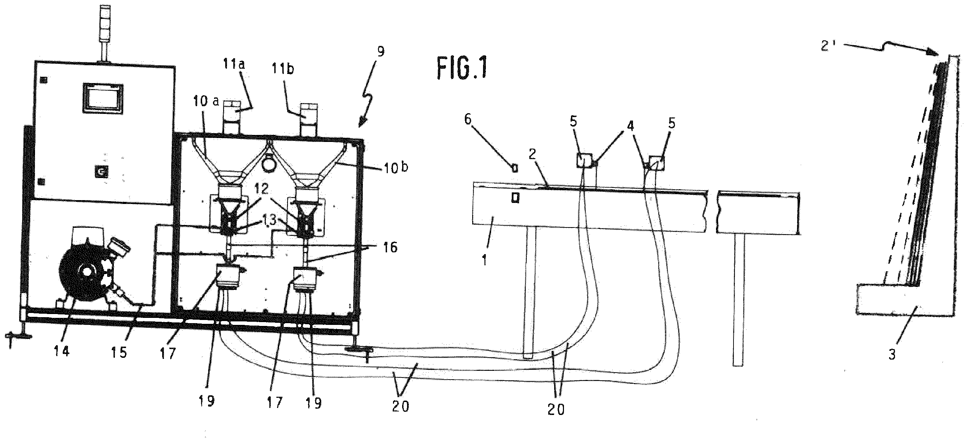

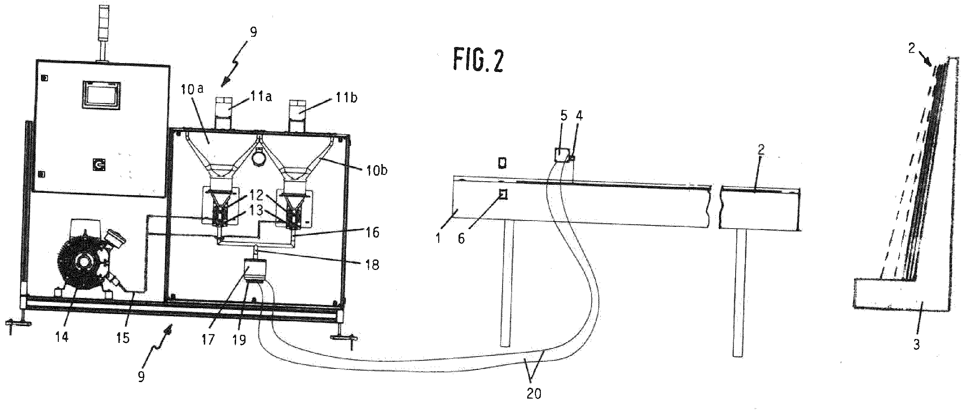

In den Figuren 1 und 2 ist eine Transportstrecke 1 angedeutet, die am Ausgang einer nicht näher dargestellten Produktionsstraße zur Herstellung von Flachglaselementen, wie sie zum Beispiel als Fensterglas verwendet werden, angeordnet sein kann. Mittels der Transportstrecke 1 werden die hierauf transportierten Flachglaselemente 2 einem Stapelgestell 3 zugeführt, auf dem ein durch aneinander angelehnte Flachglaselemente gebildeter Senkrechtstapel 2' aufnehmbar ist. Zur Stapelbildung kann eine geeignete Handlingvorrichtung oder ein programmierbarer Roboter vorgesehen sein. Vor der Stapelbildung wird auf wenigstens eine Seite der Flachglaselemente ein Pulverauftrag aufgebracht, der zwei Komponenten in Form eines pulverförmigen Trennmittels und eines pulverförmigen Korrosionsschutzmittels umfasst.

Das Trennmittel besteht zweckmäßig aus Polymethmethylacrylat-Pulver. Dabei handelt es sich um ein Pulver mit kugelförmiger Partikelkonfiguration. Das Korrosionsschutzmittel besteht aus einer oder mehreren, in Pulverform vorliegenden Säure beziehungsweise Säuren, bevorzugt Adipinsäure und/oder Borsäure und/oder einer oder mehreren organischen Säuren. Die Partikel eines derartigen Pulvermaterials besitzen keine bestimmte Konfiguration.

Der gesamte Pulverauftrag soll so bemessen sein, dass bei der Stapelbildung kein oder nur wenig Pulvermaterial nach unten herabfällt. Eine Materialansammlung von bei der Stapelbildung nach unten herabfallendem Pulvermaterial würde nämlich dazu führen, dass sich zwischen den aufeinanderfolgenden Flachglaselementen 2 ein von deren unterem Ende ausgehender keilförmiger Spalt und damit eine keilförmige Auffächerung des Stapels 2' ergäbe, wie in den Figuren 1 und 2 mit unterbrochenen Linien angedeutet ist. Die beiden den Pulverauftrag bildenden Komponenten können zwar miteinander aufgetragen werden, müssen jedoch zur Vermeidung einer gegenteiligen Abhängigkeit der jeweils aufzutragenden Teilmengen unabhängig voneinander bereitgestellt und unabhängig voneinander dosiert werden. Der Auftragvorgang kann wie im dargestellten Ausführungsbeispiel durch Aufsprühen des pulverförmigen Materials auf die Oberseite der auf der Transportstrecke 1 aufliegenden Flachglaselemente 2 erfolgen. Die Auftrageinrichtung kann dabei einen oder mehrere, mit zweckmäßig als Sprühdüsen ausgebildeten Auftragdüsen 4 versehene Auftragbalken 5 aufweisen, welche sich quer zur Laufrichtung der unter ihnen durchgeführten Flachglaselemente 2 erstrecken und zumindest eine der Breite der Flachglaselemente 2 entsprechende Länge aufweisen. Die Auftragdüsen 4 sind gleichmäßig über die Länge des zugeordneten Auftragbalkens 5 verteilt.

Bei der Ausführung gemäß Figur 1 sind zwei in Laufrichtung der Flachglaselemente mit geringem Abstand hintereinander angeordnete Auftragbalken 5 vorgesehen, die zweckmäßig auf den einander zugewandten Seiten mit ihren Auftragdüsen 4 versehen sind. Von den beiden Auftragbalken 5 der Ausführung gemäß Figur 1 ist jeder nur einer Komponente des herzustellenden Pulverauftrags, das heißt entweder nur dem Trennmittel oder nur dem Korrosionsschutzmittel zugeordnet. Die Auftragdüsen 4 der beiden Auftragbalken 5 werden mit kurzem Abstand gleichzeitig aktiviert beziehungsweise passiviert, so dass die beiden Komponenten des herzustellenden Pulverauftrags praktisch gleichzeitig aufeinander aufgetragen und dabei miteinander verschnitten werden. Bei der Ausführung gemäß Figur 2 ist nur ein derartiger Düsenbalken 5 vorgesehen, der mit einem vorher bereits hergestellten Verschnitt der beiden Komponenten des herzustellenden Pulverauftrags beaufschlagt wird und dessen Auftragdüsen 4 daher bereits einen Verschnitt der beiden Komponenten auf die zugewandte Oberfläche der Flachglaselemente 2 aufsprühen. Zur Steuerung der Auftragbalken 5 beziehungsweise deren Auftragdüsen 4 kann eine die Belegung der Transportstrecke 1 überwachende Sensoreinrichtung 6, beispielsweise in Form einer Lichtschranke, vorgesehen sein. Es wäre aber auch eine Steuerung im Takt der vorgeordneten Produktstraße denkbar.

Der in den dargestellten Beispielen durch einen oder mehrere Auftragbalken 5 jeweils gebildeten Auftrageinrichtung ist jeweils eine Versorgungsstation 9 vorgeordnet, in welcher die beiden Komponenten des auf die Flachglaselemente 2 aufzubringenden Pulverauftrags bereitgestellt und dosiert werden. Die Versorgungsstation 9 enthält in beiden Ausführungen gemäß Figur 1 und 2 eine Behälteranordnung mit zwei nebeneinander angeordneten, hier zweckmäßig trichterförmig ausgebildeten Behältern 10a, 10b, die für die Bereitstellung einer jeweils zugeordneten Komponente des auf die Flachglaselemente 2 aufzubringenden Pulverauftrags ausgebildet und eingerichtet sind. Dementsprechend ist einer der beiden Behälter, hier der links gezeichnete Behälter 10a, für die Bereitstellung des pulverförmigen Trennmittels und der andere Behälter, hier der rechts gezeichnete Behälter 10b, für die Bereitstellung des pulverförmigen Korrosionsschutzmittels ausgebildet und eingerichtet. Der Behälter 10a enthält dementsprechend das pulverförmige Trennmittel und ist mit einem Zuführschacht 11a versehen, der an eine nicht dargestellte Versorgungseinrichung für pulverförmiges Trennmittel angeschlossen sein kann und über den das pulverförmige Trennmittel in den zugeordneten Behälter 10a einfüllbar ist, der vorteilhaft mit einer an das Trennmittel angepassten Beschichtung versehen sein kann. Das gilt auch für den zugeordneten Zuführschacht 11a. Der Behälter 10b enthält das pulverförmige Korrosionsschutzmittel und ist über seinen Zuführschacht 11b, der an eine Versorgungseinrichtung für pulverförmiges Korrosionsschutzmittel angeschlossen sein kann, mit dem pulverförmigen Korrosionsschutzmittel befüllbar. Auch der Behälter 10b und zweckmäßig auch der zugeordnete Zuführschacht 11b können mit einer geeigneten, an das Korrosionsschutzmittel angepassten Beschichtung versehen sein.

Der durch die beiden Behälter 10 a, b gebildeten Behälteranordnung ist eine Dosierstation nachgeordnet, die aus einer Anordnung von zwei Dosieren 12 besteht, wobei am Ausgang eines jeden der beiden Behälter 10a, b jeweils ein Dosierer 12 angeordnet ist. Die Durchsatzmenge der beiden Dosierer 12 ist unabhängig voneinander einstellbar. Die Dosierer 12 können jeweils ein Dosierrad enthalten, das bei jeder Umdrehung eine vorgegebene Pulvermenge freigibt. Durch Einstellung der Drehzahl des Dosierrads lässt sich dementsprechend die gewünschte Durchsatzmenge und damit die der jeweils zugeordneten Pulverkomponente zugeordnete Teilmenge des gesamten auf die Flachglaselemente 2 aufzubringenden Pulverauftrags einstellen. Die von den Dosierern 12 jeweils freigegebene Pulvermenge wird der der Transportstrecke 1 zugeordneten Auftrageinrichtung zugeführt.

Zur Gewährleistung eines zuverlässigen Transports des von den Dosierern 12 freigegebenen pulverförmigen Materials zur Auftrageinrichtung ist jedem Dosierer 12 ein zugeordneter Injektor 13 nachgeordnet. Der Injektor 13 kann einfach als Venturidüse ausgebildet sein, dessen Hauptrohr an eine einen Luftstrom erzeugende Druckluftquelle angeschlossen ist und in dessen Nebeneingang der Ausgang des jeweils zugeordneten Dosierers 12 einmündet.

Als den gewünschten Luftstrom erzeugende Druckluftquelle ist in den dargestellten Beispielen gemäßen Figuren 1 und 2 jeweils ein in der Versorgungsstation 9 vorhandener Kompressor oder Gebläse 14 vorgesehen, der über eine entsprechend verzweigte Druckluftleitung 15 mit den beiden Injektoren 13 verbunden ist. An den Ausgang der Injektoren 13 schließt jeweils eine mit dem aus dem jeweils zugeordneten Behälter 10a, b kommenden, durch den zugeordneten Dosierer 12 dosierten und im zugeordneten Injektor 13 fluidisierten Pulvermaterial beaufschlagte Strömungsleitung 16 an. Das in die Strömungsleitungen 16 eingespeiste Pulvermaterial wird auf die Auftragdüsen 4 der nachgeordneten Auftrageinrichtung verteilt. Hierzu ist eine geeignete Verteileinrichtung vorgesehen, die für jeden Auftragbalken 5 der Auftrageinrichtung jeweils einen zugeordneten Verteiler 17 aufweist.

Bei der Ausführung gemäß Figur 1 enthält die Auftrageinrichtung zwei Auftragbalken 5, die jeweils nur einer Komponente des auf die Flachglaselemente 2 aufzubringenden Pulverauftrags zugeordnet sind und dementsprechend alternativ nur mit Trennmittel beziehungsweise nur mit dem Korrosionsschutzmittel beaufschlagt werden. Bei dieser Ausführung ist daher jedem Auftragbalken 5 ein eigener Verteiler 17 vorgeordnet, der über eine unverzweigte Strömungsleitung 16 und den vorgeordneten Injektor 13 und Dosierer 12 an den für die jeweils zugeordnete Komponente des Pulverauftrags vorgesehenen Behälter 10 angeschlossen ist.

Bei der Ausführung gemäß Figur 2 enthält die Auftrageinrichtung nur einen Auftragbalken 5. Dementsprechend enthält die Verteileinrichtung hier auch nur einen dem einen Auftragbalken 5 zugeordneten Verteiler 17. Dieser ist an einen Sammelstutzen 18 angeschlossen, in den beide Strömungsleitungen 16 einmünden, die über den jeweils vorgeordneten Injektor 13 und Dosierer 12 aus dem jeweils zugeordneten Behälter 10a, b beaufschlagt werden. Hier findet dementsprechend bereits im Sammelstutzen 18 und/oder im Verteiler 17 ein Verschnitt der aus den beiden Behältern 10a, b jeweils kommenden Pulverkomponenten statt, wogegen bei der Ausführung gemäß Figur 1 der Verschnitt erst an oder in der Nähe der Oberfläche der Flachglaselemente 2 erfolgt. Ansonsten stimmen die Ausführungen gemäß Figuren 1 und 2 überein.

Die Verteiler 17 können jeweils ein zylinderförmiges Gehäuse aufweisen, in welches von oben die jeweils zugeordnete Strömungsleitung 16 beziehungsweise der Sammelstutzen 18 einmünden und in welchem unterhalb des Eingangs ein Verteilkegel vorgesehen ist, wobei im Bereich des unteren Umfangs des Verteilkegels gleichmäßig auf seinen Umfang verteilte Ausgänge 19 vorgesehen sind, die über in den Figuren 1 und 2 lediglich schematisch angedeutete Verbindungsleitungen 20 mit einer jeweils zugeordneten Auftragdüse 4 verbunden sind. Jedem Ausgang 19 jedes Verteilers 17 kann ein Absperrventil zugeordnet sein, wodurch die Auftragdichte und insbesondere die Auftragbreite steuerbar sind.

Unabhängig davon, wo der Verschnitt des pulverförmigen Trennmittels mit dem pulverförmigen Korrosionsschutzmittel erfolgt, ist bei beiden Ausführungen gemäß Figuren 1 und 2 sichergestellt, dass die jeweils auf die Flachglaselemente 2 gelangenden Teilmengen des pulverförmigen Trennmittels und des pulverförmigen Korrosionsschutzmittels unabhängig voneinander und damit bedarfsgerecht dosiert werden können, so dass sowohl ein Überschuss an Trennmittel als auch ein Mangel an Korrosionsschutzmittel vermeidbar sind und umgekehrt.

Als Variante zum Aufsprühen des Pulverauftrags gemäß den oben beschriebenen Beispielen kann der Pulverauftrag auch aufgestreut werden. In einem derartigen Fall können anstelle von Auftragbalken zur Bildung der Auftrageinrichtung über die Breite der Transportstrecke 1 sich erstreckende Dosierwalzen vorgesehen sein, die zusammen mit zugeordneten Spaltbegrenzungen einen Auftragspalt begrenzen. Hierbei können die dem pulverförmigen Trennmittel und dem pulverförmigen Korrosionsschutzmittel zugeordneten, mit Dosierwalzen vorstehend genannter Art versehenen Dosierer daher in die Auftrageinrichtung integriert sein und so gleichzeitig ein Element der Auftrageinrichtung bilden.

## Patentansprüche

1. Verfahren zum Versehen von Flachglaselementen (2) mit einem ein pulverförmiges Korrosionsschutzmittel und ein pulverförmiges Trennmittel enthaltenden Korrosionsschutz- und Trennmittelauftrag, wobei das Korrosionsschutzmittel und das Trennmittel miteinander auf wenigstens eine Seite der Flachglaselemente (2) aufgetragen werden, **dadurch gekennzeichnet, dass** das Korrosionsschutzmittel und das Trennmittel jeweils unabhängig voneinander bereitgestellt und unabhängig voneinander dosiert und erst nach der Dosierung miteinander verschnitten werden.

2. Verfahren nach Anspruch 1, **dadurch gekennzeichnet, dass** das Korrosionsschutzmittel und das Trennmittel nach der Dosierung jeweils separat einander benachbarten, gleichzeitig betätigbaren Organen der Auftrageinrichtungen zugeführt und erst beim Auftragen auf die Flachglaselemente (2) miteinander verschnitten werden.

3. Verfahren nach Anspruch 1, **dadurch gekennzeichnet, dass** das Korrosionsschutzmittel und das Trennmittel nach der Dosierung zusammengeführt und anschließend als Pulvermischung mittels einer gemeinsamen Auftrageinrichtung auf die Flachglaselemente (2) aufgetragen werden.

4. Vorrichtung zum Versehen von Flachglaselementen (2) mit einem ein pulverförmiges Korrosionsschutzmittel und ein pulverförmiges Trennmittel enthaltenden Korrosionsschutz- und Trennmittelauftrag mit einer Dosierereinrichtung, einer dieser vorgeordneten Behälteranordnung und einer dieser nachgeordneten oder mit dieser zusammenwirkenden Auftrageinrichtung, wobei die Flachglaselemente (2) mittels der Auftrageinrichtung mit einem ein pulverförmiges Korrosionsschutzmittel und ein pulverförmiges Trennmittel enthaltenden Korrosionsschutz- und Trennmittelauftrag versehen werden, wobei das Korrosionsschutzmittel und das Trennmittel miteinander auf wenigstens eine Seite der Flachglaselemente (2) aufgetragen werden, und wobei das Korrosionsschutzmittel und das Trennmittel in der Behälteranordnung jeweils unabhängig voneinander bereitgestellt und mittels der Dosiereinrichtung unabhängig voneinander dosiert und erst nach der Dosierung miteinander verschnitten werden, zur Durchführung des Verfahrens nach einem der vorhergehenden Ansprüche, **dadurch gekennzeichnet, dass** die Behälteranordnung neben einem Trennmittel-Behälter (10a) der für die Bereitstellung nur des pulverförmigen Trennmittels ausgebildet und eingerichtet und über einen Zuführschacht (11a) hiermit beaufschlagbar ist, einen Korrosionsschutzmittel-Behälter (10b) aufweist, der für die Bereitstellung nur des pulverförmigen Korrosionsschutzmittels ausgebildet und eingerichtet und über einen Zuführschacht (11b) hiermit beaufschlagbar ist, und dass an den Trennmittel-Behälter (10a) und an den Korrosionsschutzmittel-Behälter (10b) ausgangsseitig jeweils ein zugeordneter, eigener Dosierer (12) angeschlossen ist, wobei die Fördermenge des Trennmittel-Dosierers (12) unabhängig von der Fördermenge des Korrosionsschutzmittel-Dosierers (12) einstellbar ist und wobei jeder Dosierer (12) ausgangsseitig mit der Auftrageinrichtung verbunden ist oder ein Element der Auftrageinrichtung bildet.

5. Vorrichtung nach Anspruch 4, **dadurch gekennzeichnet, dass** jeder Dosierer (12) in einen jeweils zugeordneten Injektor (13) mündet, der mit einem Luftstrom beaufschlagbar und an den eine zur Auftragseinrichtung führende Strömungsleitung (16) angeschlossen ist.

6. Vorrichtung nach Anspruch 4 oder 5, **dadurch gekennzeichnet, dass** die Auftrageinrichtung wenigstens einen quer zur Laufrichtung der darunter vorbei transportierbaren Flachglaselemente (2) angeordneten Auftragbalken (5) mit mehreren über seine Länge verteilten Auftragdüsen (4) aufweist, wobei jeder Auftragbalken (5) an einen der Dosiereinrichtung nachgeordneten Verteiler (17) angeschlossen ist, der mehrere mit den Auftragdüsen (4) des zugeordneten Auftragbalkens (5) verbundene Auslässe (19) und einen Eingang aufweist, der an mindestens eine von der Dosiereinrichtung abgehende Strömungsleitung (16) angeschlossen ist.

7. Vorrichtung nach Anspruch 6, **dadurch gekennzeichnet, dass** die Auftrageinrichtung zwei einander benachbarte Auftragbalken (5) aufweist, und dass für jeden Auftragbalken (5) ein jeweils zugeordneter Verteiler (17) vorgesehen ist, dessen Eingang an eine unverzweigte, aus nur einem zugeordneten Behälter (10a, b) der Behälteranordnung beaufschlagbare Strömungsleitung (16) angeschlossen ist.

8. Vorrichtung nach Anspruch 6, **dadurch gekennzeichnet, dass** die Auftrageinrichtung nur einen Auftragbalken (5) aufweist und dass der diesem Auftragbalken (5) zugeordnete Verteiler (17) eingangsseitig an einen Sammelstutzen 18 angeschlossen ist, in den die aus beiden Behältern (10) der Behälteranordnung beaufschlagbaren Strömungsleitungen (16) münden.

9. Vorrichtung nach einem der vorhergehenden Ansprüche 4-8, **dadurch gekennzeichnet, dass** jeder Dosierer (12) der Dosiereinrichtung ein Dosierrad aufweist, das bei jeder Umdrehung eine vorgegebene Pulvermenge freigibt und dessen Drehzahl in Abhängigkeit von der gewünschten Auftragmenge der jeweils zugeordneten Komponente des gesamten Pulverauftrags einstellbar ist.

10. Vorrichtung nach einem der vorhergehenden Ansprüche 4-9, **dadurch gekennzeichnet, dass** jeder Verteiler (17) mit mehreren mit jeweils einer Auftragdüse (4) verbundenen Ausgängen (19) versehen ist, denen jeweils ein Absperrventil zugeordnet ist und dass jeder Verteiler (17) einen unterhalb seines Eingangs angeordneten Verteilerkegel aufweist, wobei im Bereich des unteren Umfangs des Verteilerkegels die gleichmäßig hierauf verteilten Ausgänge (19) und die diesen zugeordneten Absperrventile vorgesehen sind.

11. Vorrichtung nach einem der vorhergehenden Ansprüche 4-10, **dadurch gekennzeichnet, dass** jeder Injektor (13) als Venturidüse ausgebildet ist, die an eine Luftstromquelle (14) angeschlossen ist und einen an einen mit einem jeweils zugeordneten Behälter (10a, b) der Behälteranordnung verbundenen Dosierer (12) angeschlossenen Nebeneingang aufweist.

12. Vorrichtung nach einem der vorhergehenden Ansprüche 4-11, **dadurch gekennzeichnet, dass** die Flachglaselemente (2) auf einer zu einem Stapelgestell (3) führenden Horizontalfördereinrichtung (1) transportierbar sind, der ein seine Belegung überwachender Sensor (6) zugeordnet ist, mittels dessen die Auftragdüsen (4) jedes Auftragbalkens (5) steuerbar sind.
